# EUROPEAN PATENT APPLICATION

(11) **EP 3 163 424 A1**
(43) Date of publication of application: **03.05.2017**
(21) Application number: 16194379.0
(22) Date of filing: 18.10.2016
(51) Int. Cl.: G06F 3/0483, G06F 3/0488

(54) **DISPLAY DEVICE**

(30) Priority: 26.10.2015 JP 2015209824
(71) Applicant: Kyocera Document Solutions Inc., Osaka-shi, Osaka 540-8585 (JP)
(72) Inventor: NOMURA, Kazuma, Osaka-shi, Osaka 540-8585 (JP)
(74) Representative: Viering, Jentschura & Partner mbB Patent- und Rechtsanwälte

(57) **Abstract**

A display device (1) includes a display section (2), a detecting section (3) that detects a touch point (T) made on the display section, and a controller (5) including a CPU. The display section displays one (any one of GA to GZ) of a plurality of images (G) for which respective page numbers are set. The detecting section detects that a distance (H, H1, or H2) between touch points (T1 and T2) of a multi-touch made on the display section displaying the one image is reduced. The controller determines a transition-target page number (PB) from the page numbers set for the respective plurality of images, according to a length (N) by which the distance between the touch points is reduced and causes transition of the one image displayed on the display section to a transition-target image. A page number set for the transition-target page is the transition-target page number.

## Description

### BACKGROUND

The present disclosure relates to a display device.

A certain display device displays one of a plurality of images when displaying the plurality of images in a preview format on a display section. When a user performs a swipe operation on the display section, the display device causes transition of the displayed image on the display section to another one of the images on the next page. As a result, the image on the next page is displayed in the preview format on the display section.

### SUMMARY

A display device according to the present disclosure includes a display section, a detecting section, and a controller. The controller includes a CPU. The display section displays, under control of the controller, one of a plurality of images for which respective page numbers are set. The detecting section detects a touch point made on the display section. The detecting section detects that a distance between touch points of a multi-touch made on the display section displaying the one image is reduced. The controller determines, based on a result of detection by the detecting section, a transition-target page number from the page numbers set for the respective plurality of images, according to a length by which the distance between the touch points is reduced and causes transition of the one image displayed on the display section to a transition-target image. A page number set for the transition-target page is the transition-target page number.

### BRIEF DESCRIPTION OF THE DRAWINGS

FIG. 1 is a block diagram of a display device according to an embodiment.
FIGS. 2A and 2B illustrate image transition processing by a swipe operation.
FIGS. 3A and 3B illustrate zooming processing by a pinch operation.
FIGS. 4A to 4C illustrate an example of image transition processing by the pinch operation.
FIG. 4D illustrates an example of a displayed image after the pinch operation.
FIGS. 5A and 5B each illustrate a method for determining a transition-target page number.
FIGS. 6A to 6C illustrate another example of the image transition processing by the pinch operation.
FIG. 6D illustrates another example of the displayed image after the pinch operation.
FIG. 7 illustrates a variation of a method for notifying a user of a transition-target image.
FIGS. 8A and 8B each illustrate a variation of the method for determining the transition-target page number.

### DETAILED DESCRIPTION

### <Embodiment>

The following explains an embodiment of the present disclosure with reference to the drawings. Elements in the drawings that are the same or equivalent are marked by the same reference signs. Furthermore, explanation of such elements is not repeated.

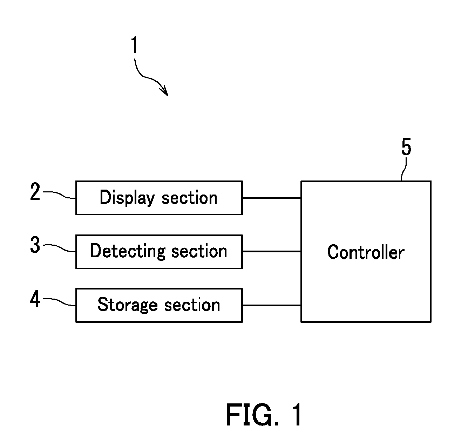

A display device according to the present embodiment will be explained with reference to FIGS. 1 to 6. FIG. 1 is a block diagram of the display device according to the present embodiment.

The display device according to the present embodiment displays one of a plurality of images, and causes transition of the displayed image to a desired image among the plurality of images by a gesture operation. The display device according to the present embodiment is used for example as an operation panel of a multifunction peripheral.

As illustrated in FIG. 1, a display device 1 according to the present embodiment includes a display section 2, a detecting section 3, a storage section 4, and a controller 5.

The display section 2 displays an image under control of the controller 5. The display section 2 is a liquid crystal display section, for example.

The detecting section 3 detects a touch point made on the display section 2. The touch point is a point at which a user touches the display section 2 with a finger. The detecting section 3 is for example a touch panel and is disposed on the display section 2.

The detecting section 3 detects that a swipe operation or a pinch operation is performed on the display section 2. The swipe operation refers to touching a screen of the display section 2 with a finger and moving a touch point by the finger in a direction. The pinch operation refers to multi-touching the screen of the display section 2 with fingers and increasing or reducing a distance between touch points by the fingers.

The storage section 4 stores a plurality of images therein. The storage section 4 is a non-volatile storage device, for example.

The controller 5 controls each of the sections (i.e., the display section 2, the detecting section 3, and the storage section 4) of the display device 1. The controller 5 includes a central processing unit (CPU), a random access memory (RAM), and a read only memory (ROM). The CPU serves as the controller 5 by executing programs stored in the ROM.

The controller 5 controls display by the display section 2 based on a result of detection by the detecting section 3.

Specifically, the controller 5 causes the display section 2 to display one of a plurality of images. The plurality of images are stored in the storage section 4. Page numbers each are set for a corresponding one of the plurality of images.

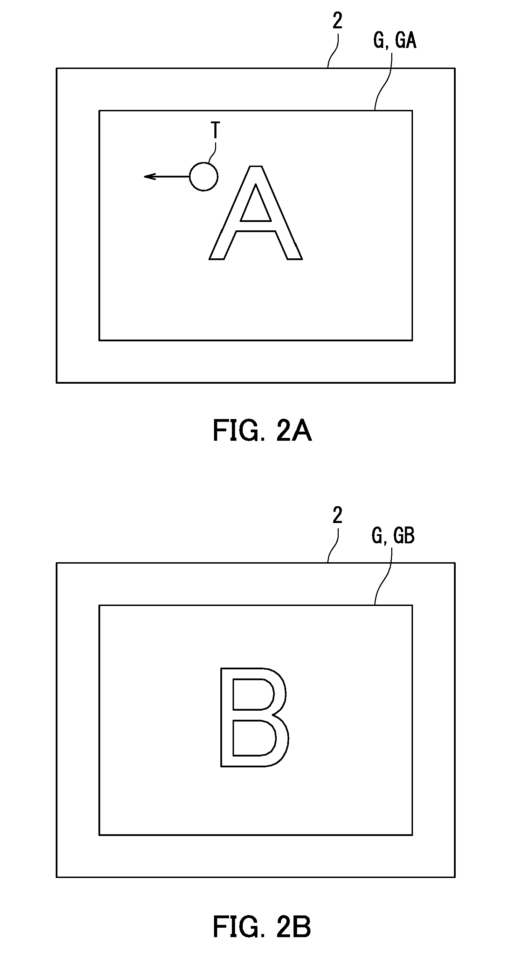

The detecting section 3 detects that the swipe operation is performed on the display section 2. The controller 5 executes first transition processing based on a result of detection by the detecting section 3. The first transition processing refers to processing to cause transition of the displayed image on the display section 2 to an image for which a page number subsequent or directly previous to that of the currently displayed image is set. A specific example of the first transition processing will be described later with reference to FIGS. 2A and 2B.

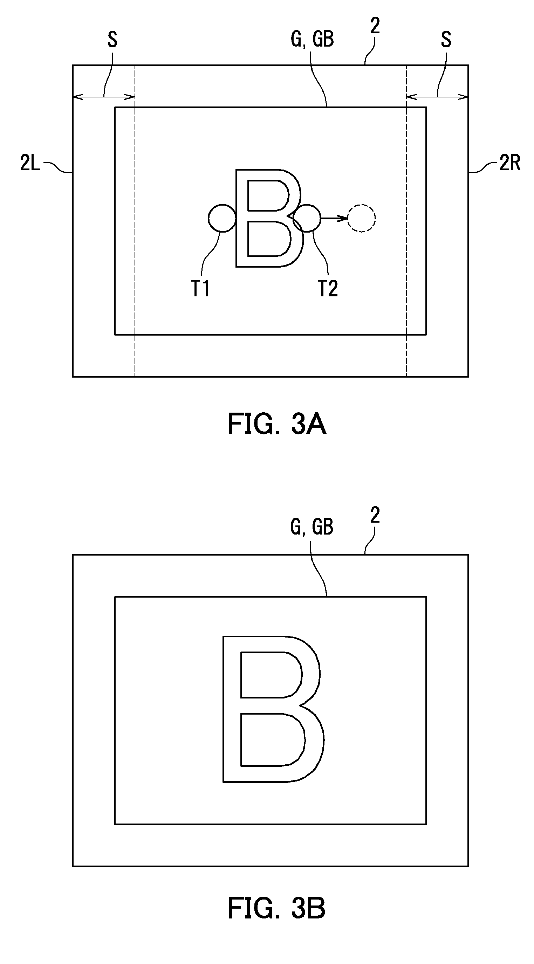

The detecting section 3 detects that touch points of a multi-touch on the display section 2 each are not located within a predetermined distance from each of the left and right edges (predetermined points) of the screen of the display section 2. The controller 5 determines based on a result of detection by the detecting section 3 that a zooming operation for the displayed image is performed on the display section 2 and executes zooming processing. The zooming processing refers to processing to zoom in or out the displayed image on the display section 2 when a distance between the touch points of the multi-touch is increased or reduced. A specific example of the zooming processing will be described later with reference to FIGS. 3A and 3B.

The detecting section 3 detects that one of the touch points of the multi-touch on the display section 2 displaying one image is located within the predetermined distance from the right edge (one edge) or the left edge (other edge) of the screen of the display section 2 and that the distance between the touch points is reduced. The controller 5 determines based on a result of detection by the detecting section 3 that a page-transition operation is performed on the display section 2 and executes second transition processing. The page-transition operation refers to an operation to cause transition of the displayed image on the display section 2 to a desired image among the plurality of images.

The second transition processing refers to processing by the controller 5 to determine, based on a result of detection by the detecting section 3 that the distance between the touch points of the multi-touch is reduced, a transition-target page number from the page numbers set for the plurality of images according to a length by which the distance between the touch points is reduced and to cause transition of the image

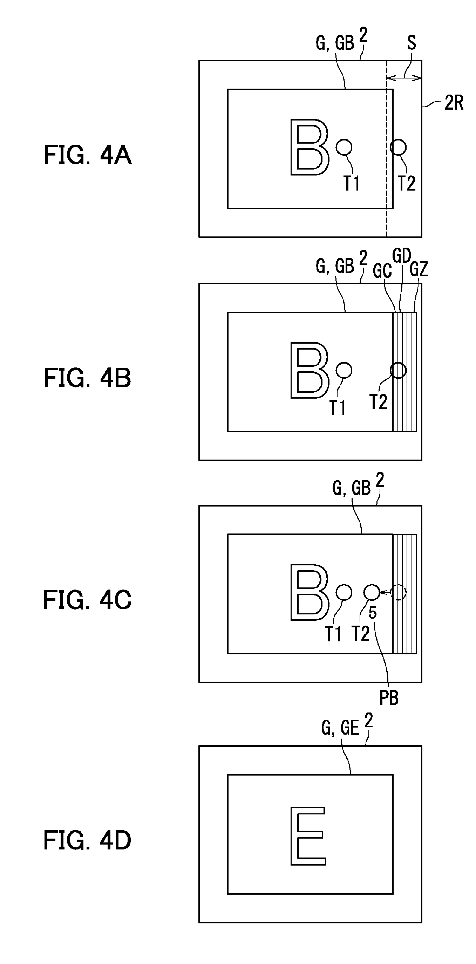

(displayed image) displayed on the display section 2 from the one image to a transition-target image. The transition-target image is an image for which the transition-target page number is set as a page number. The transition-target page number is the page number set for an image to which the displayed image transitions by the page-transition operation. That is, the page number set for the transition-target image is the transition-target page number. A specific example of the second transition processing will be described later with reference to FIGS. 4A to 6D.

In the second transition processing, a desired transition-target page number can be rapidly determined by adjusting a distance between touch points of a multi-touch. As a result, the desired image among the plurality of images can be rapidly displayed on the display section 2 by the pinch operation (i.e., gesture operation).

A specific example of the first transition processing will be explained with reference to FIGS. 2A and 2B. FIG. 2A illustrates an example of the swipe operation. FIG. 2B illustrates an example of a displayed image after the swipe operation.

Hereinafter, characters "A" to "Z" are written on a respective plurality of images G. The images G on which "A", "B", ..., and "Z" are indicated will also be referred to as an image GA, an image GB, ..., and an image GZ, respectively. Page numbers "1", "2", ..., and "26" are set for the image GA, the image GB, ..., and the image GZ, respectively.

As illustrated in FIG. 2A, the image GA among the plurality of images G is displayed on the display section 2. A user touches the screen of the display section 2 with a finger, and moves the touch point T leftward in the screen. In response, the detecting section 3 detects that a first swipe operation is performed on the display section 2. The first swipe operation refers to an operation to cause transition of the displayed image on the display section 2 to an image for which a subsequent page number is set. Based on a result of detection by the detecting section 3, the controller 5 causes the display section 2 to scroll the image GA displayed on the display section 2 leftward in the screen of the display section 2.

As a result, the displayed image on the display section 2 transitions from the image GA to the image GB, as illustrated in FIG. 2B.

A specific example of the zooming processing will be explained with reference to FIGS. 3A and 3B. FIG. 3A illustrates an example of the pinch operation. FIG. 3B illustrates an example of a displayed image after the pinch operation.

As illustrated in FIG. 3A, the image GB among the plurality of images G is displayed on the display section 2. The user performs a multi-touch around the center of the screen of the display section 2. In response, the detecting section 3 detects that neither of the touch points T1 nor T2 of the multi-touch is located within a predetermined distance S from each of a left edge 2L and a right edge 2R of the screen of the display section 2. The controller 5 determines based on a result of detection by the detecting section 3 that the zooming operation for the displayed image is performed on the display section 2.

Then, the user moves the touch point T2 rightward in the screen to increase a distance between the touch points T1 and T2 of the multi-touch. In response, the detecting section 3 detects that the distance between the touch points T1 and T2 of the multi-touch is increased. Based on the determination by the controller 5 and a result of detection by the detecting section 3, the controller 5 determines a magnification rate according to a length by which the distance between the touch points T1 and T2 is increased.

As illustrated in FIG. 3B, the controller 5 causes the display section 2 to zoom in the image GB displayed on the display section 2 according to the determined magnification rate.

When the user reduces the distance between the touch points T1 and T2, the controller 5 determines a reduction rate according to a length by which the distance between the touch points T1 and T2 is reduced and causes the display section 2 to zoom out the image GB displayed on the display section 2 according to the determined reduction rate.

A specific example of the second transition processing will be explained with reference to FIGS. 4A to 6D. FIGS. 4A to 4C illustrate an example of the pinch operation. FIG. 4D illustrates an example of a displayed image after the pinch operation.

As illustrated in FIG. 4A, the display section 2 displays the image GB by a first displaying method. The first displaying method refers to a method for displaying one of the plurality of images G. The user performs a multi-touch around the center and the right edge 2R of the screen of the display section 2. In response, the detecting section 3 detects that the touch point T2 of the touch points T1 and T2 of the multi-touch is located within the predetermined distance S from the right edge 2R, that is, a predetermined point of the screen of the display section 2. The controller 5 determines based on a result of detection by the detecting section 3 that a first touch operation for page transition is performed on the display section 2 as the page-transition operation. The first touch operation for page transition refers to an operation to cause transition of the displayed image on the display section 2 to an image on a subsequent page.

Based on the determination by the controller 5, the controller 5 changes the method for displaying the image by the display section 2 from the first displaying method to a second displaying method, as illustrated in FIG. 4B. The second displaying method refers to a method for displaying, among the plurality of images G, the images GC to GZ on pages subsequent to the image GB displayed on the display section 2 based on a result of detection by the detecting section 3 such that the images GC to GZ are displaced from one another behind the image GB in a layered manner. The images GC to GZ are layered behind the image GB in ascending order of the page numbers. The images GC to GZ are displaced rightward from one another. Through change from the first displaying method to the second displaying method, the display device 1 notifies the user that the first touch operation for page transition has been effectively received by the display section 2.

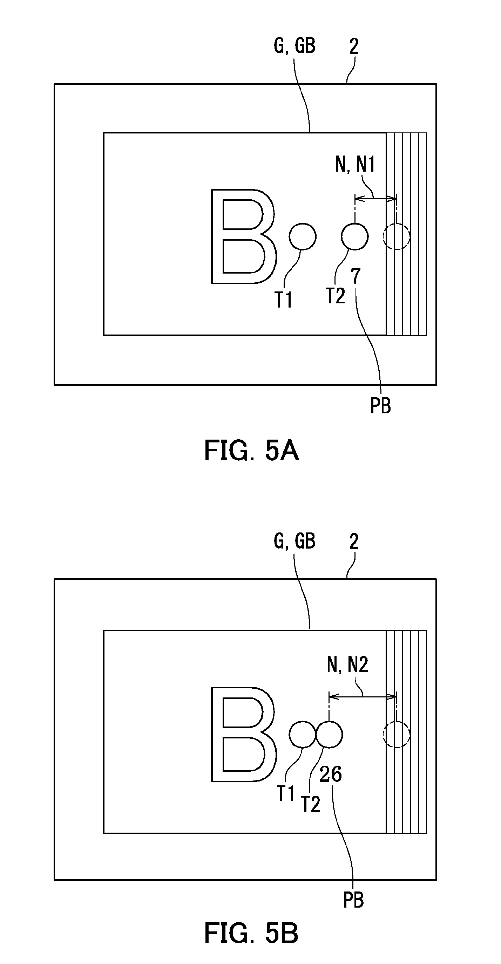

As illustrated in FIG. 4C, the user moves the touch point T2 leftward in the screen to reduce the distance between the touch points T1 and T2. The detecting section 3 detects the reduction of the distance between the touch points T1 and T2. Based on a result of detection by the detecting section 3, that is, according to a length by which the distance between the touch points T1 and T2 is reduced, the controller 5 determines the transition-target page number PB from the page numbers of the images GC to GZ. The transition-target page number PB is determined as "5". That is, the transition-target image is the image GE for which a page number of "5" is set. A method for determining a transition-target page number will be described later with reference to FIGS. 5A and 5B.

The controller 5 causes the display section 2 to display the transition-target page number PB. The controller 5 causes the display section 2 to display the transition-target page number PB in the vicinity of the touch points T1 and T2.

Then, the user removes fingers making the multi-touch from the screen of the display section 2. As a result, the detecting section 3 no longer detects the touch points T1 and T2. In other words, the detecting section 3 detects removal of the multi-touch. Based on a result of detection by the detecting section 3, the controller 5 causes the display section 2 to perform transition of the displayed image from the image GB to the image GE, as illustrated in FIG. 4D.

The method for determining the transition-target page number PB will be explained with reference to FIGS. 5A and 5B. FIGS. 5A and 5B each illustrate an example of the pinch operation.

Based on a result of detection by the detecting section 3, the controller 5 determines the transition-target page number PB such that the number of transition pages increases as the length N by which the distance between the touch points T1 and T2 of the multi-touch is reduced is increased. The number of the transition pages is a difference between a page number of an image currently displayed on the display section 2 and the transition-target page number PB. For example, the controller 5 determines the number of the transition pages according to the length N by which the distance between the touch points T1 and T2 is reduced. The controller 5 calculates a sum of the page number currently displayed on the display section 2, the determined number of the transition pages, and "1" as the transition-target page number.

In a specific example, the image GB is displayed on the display section 2, as illustrated in FIG. 5A. The page number of the image GB is "2". The user reduces the distance between the touch points T1 and T2. On the assumption that the length N by which the distance between the touch points T1 and T2 is reduced is N1, the controller 5 determines the transition-target page number PB to be "7" so that the number of the transition pages is "4", for example. Alternatively, on the assumption that the length N by which the distance between the touch points T1 and T2 is reduced is N2 larger than N1, the controller 5 determines the transition-target page number PB to be "26" so that the number of the transition pages is "23" which is larger than "4", for example.

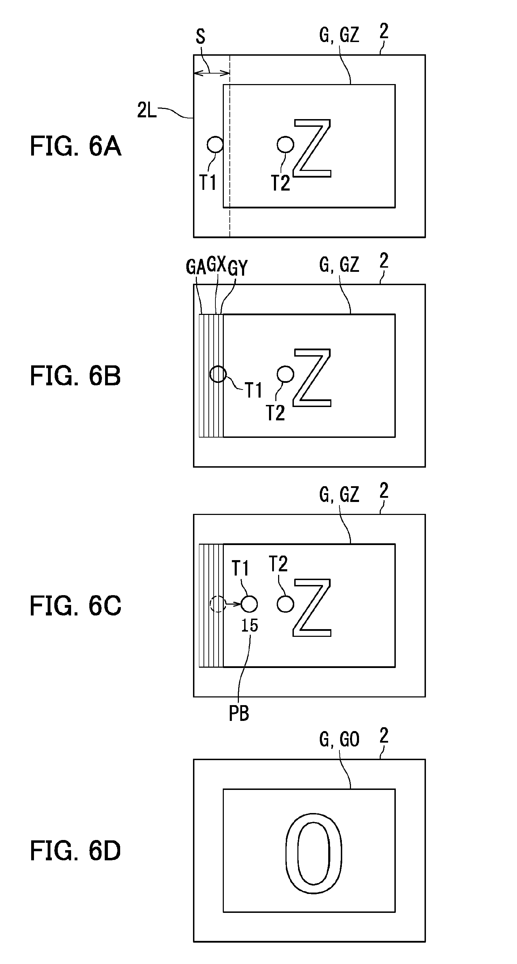

A specific example of the second transition processing will be explained with reference to FIGS. 6A to 6D. FIGS. 6A to 6C illustrate another example of the pinch operation. FIG. 6D illustrates an example of the displayed image after the pinch operation.

In the specific example explained with reference to FIGS. 4, the transition processing to cause transition of the displayed image on the display section 2 to an image on a subsequent page was explained. A specific example with reference to FIGS. 6 will explain transition processing to cause transition of the displayed image on the display section 2 to an image on a previous page.

As illustrated in FIG. 6A, the image GZ among the plurality of images G is displayed on the display section 2. The user performs a multi-touch around the center and the left edge 2L of the screen of the display section 2. The detecting section 3 then detects that the touch point T1 of the touch points T1 and T2 of the multi-touch is located within the predetermined distance S from the left edge 2L of the screen of the display section 2. The controller 5 determines based on a result of detection by the detecting section 3 that a second touch operation for page transition is performed on the display section 2 as the page-transition operation. The second touch operation for page transition refers to an operation to cause transition of the displayed image on the display section 2 to an image on a previous page.

Based on the determination by the controller 5, the controller 5 changes the method for displaying the image by the display section 2 from the first displaying method to a third displaying method, as illustrated in FIG. 6B. The third displaying method refers to a method for displaying, among the plurality of images G, the images GY to GA on pages previous to the image GZ displayed on the display section 2 based on a result of detection by the detecting section 3 such that the images GY to GA are displaced from one another behind the image GZ in a layered manner. The images GY to GA are layered behind the image GZ in descending order of the page numbers. The images GY to GA are displaced leftward from one another. Through change from the first displaying method to the third displaying method, the display device 1 notifies the user that the second touch operation for page transition has been effectively received by the display section 2.

As illustrated in FIG. 6C, the user reduces the distance between the touch points T1 and T2 of the multi-touch. According to a length by which the distance between the touch points T1 and T2 is reduced, the controller 5 determines the transition-target page number PB from the page numbers of the images GY to GA. The transition-target page number PB is determined to be "15". That is, the transition-target image is the image GO for which a page number of "15" is set.

The controller 5 causes the display section 2 to display the transition-target page number PB. Then, the user removes fingers making the multi-touch from the screen of the display section 2. As a result, the detecting section 3 no longer detects the touch points T1 and T2. That is, the detecting section 3 detects removal of the multi-touch. Based on a result of detection by the detecting section 3, the controller 5 causes transition of the displayed image on the display section 2 from the image GZ to the image GO, as illustrated in FIG. 6D. The image GO is an image for which a page number of "15" is set.

### <Variation 1>

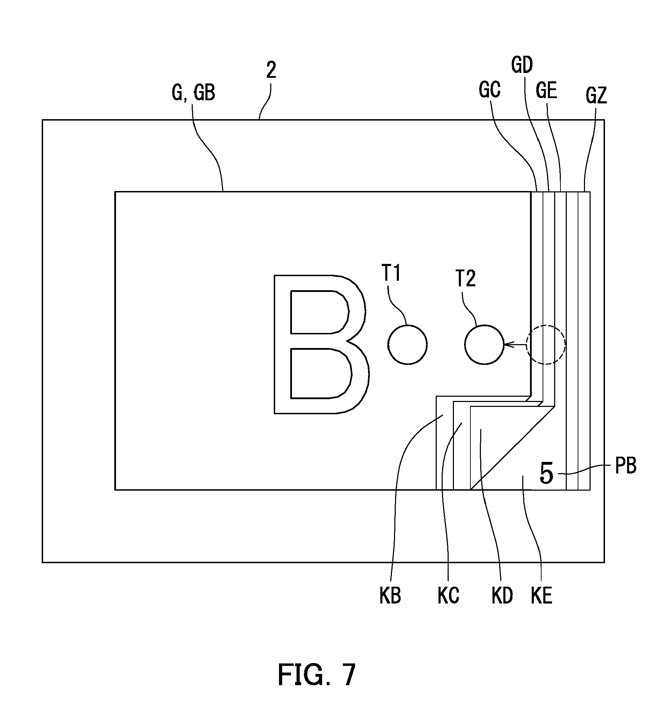

A variation of the method for notifying a user of the transition-target image will be explained with reference to FIG. 7. FIG. 7 illustrates the variation of the method for notifying a user of the transition-target image.

This variation differs from the above-described embodiment in that the transition-target image is informed to a user by displaying images from the displayed image on the display section 2 to an image directly previous to the transition-target image in a manner of page turning.

In a specific example, the image GB is displayed on the display section 2, as illustrated in FIG. 7. The user performs a multi-touch around the center and the right edge of the screen of the display section 2. The detecting section 3 detects that the first touch operation for page transition is performed on the display section 2. Based on a result of detection by the detecting section 3, the controller 5 displays the images GC to GZ behind the image GB so as to be displaced rightward from one another in a layered manner.

Then, the user reduces the distance between the touch points T1 and T2. The detecting section 3 detects the reduction of the distance between the touch points T1 and T2. Based on a result of detection by the detecting section 3, the controller 5 determines the transition-target page number PB to be "5" according to a length by which the distance between the touch points T1 and T2 is reduced. That is, the transition-target image is the image GE for which a page number of "5" is set.

Then, the controller 5 causes the display section 2 to display respective bottom-right corners KB, KC, and KD of the images GB, GC, and GD all layered over the image GE among the images GC to GZ so as to be folded up in front of the image GB. As a result, a bottom-right corner KE of the image GE is exposed. In the above configuration, a part (i.e., the bottom-right corner KE) of the image GE can be directly viewed by the user. The bottom-right corners KB, KC, and KD of the respective images GB, GC, and GD are examples of peripheral parts of the respective images GB, GC, and GD.

In the present variation, the images GB, GC, and GD each are displayed in a manner of page turning by folding up their bottom-right corners KB, KC, and KD.

In the specific example explained with reference to FIG. 7, the transition-target page number PB is displayed at the bottom-right corner KE of the image GE, which is the transition-target image. It should be noted that the transition-target page number PB may not be displayed.

### <Variation 2>

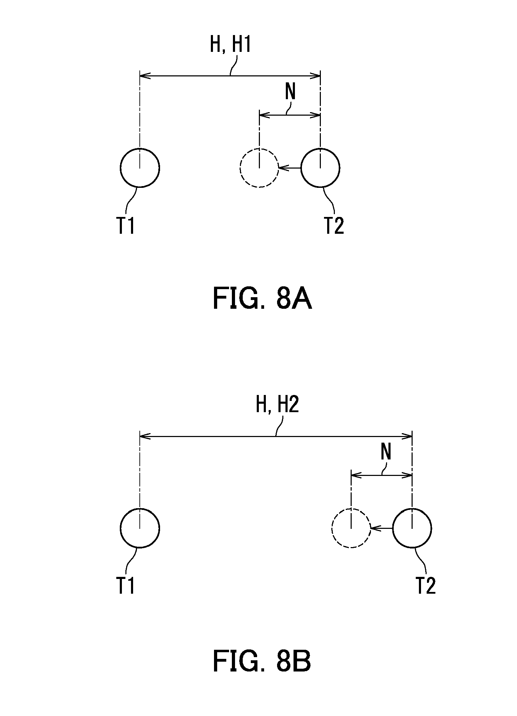

A variation of the method for determining the transition-target page number PB will be explained with reference to FIGS. 8A and 8B. FIGS. 8A and 8B each illustrate an example of the pinch operation.

This variation differs from the above-described embodiment in that the transition-target page number PB is determined such that a ratio of the number of the transition pages to a length by which a distance between touch points of a multi-touch is reduced increases as the distance between the touch points before reduction is short.

Specifically, the controller 5 calculates a total sheet number (total number) of the displayed image on the display section 2 and images displayed on the display section 2 so as to be displaced from one another behind the displayed image in a layered manner. Then, the controller 5 divides the total sheet number of the images by the distance between the touch points of the multi-touch before reduction. A sheet number of images allocated to a unit length between the touch points of the multi-touch before reduction is calculated by division as above. Then, the controller 5 multiplies the obtained quotient by the length by which the distance between the touch points is reduced. A sheet number of images allocated to the length by which the distance between the touch points is reduced is calculated by multiplication as above. The obtained product is rounded off to be an integer.

In a situation in which the page-transition operation received by the display section 2 is the first touch operation for page transition, that is, in a situation in which the controller 5 determines, based on a result of detection by the detecting section 3, the transition-target page number from the page numbers subsequent to the page number of the displayed image on the display section 2 to cause transition of the displayed image on the display section 2 to an image on a subsequent page, the controller 5 adds the resultant product to the page number of the displayed image on the display section 2 and determines the obtained sum as the transition-target page number PB. In a situation in which the page-transition operation received by the display section 2 is the second touch operation for page transition, that is, in a situation in which the controller 5 determines, based on a result of detection by the detecting section 3, the transition-target page number from the page numbers previous to the page number of the displayed image on the display section 2 to cause transition of the displayed image on the display section 2 to an image on a previous page, the controller 5 subtracts the resultant product from the page number of the displayed image on the display section 2 and determines the obtained difference as the transition-target page number PB.

In the specific examples explained with reference to FIGS. 8A and 8B, the first touch operation for page transition is received by the display section 2 as the pinch operation. In the specific example explained with reference to FIG. 8A, a distance H between touch points T1 and T2 of a multi-touch before reduction is represented by H1. In the specific example explained with reference to FIG. 8B, a distance H between touch points T1 and T2 of a multi-touch before reduction is represented by H2. The distance H2 is larger than the distance H1. In this variation, the distance between the touch points T1 and T2 is reduced by the same length N by the pinch operations, as illustrated in FIGS. 8A and 8B.

In a situation as above, the transition-target page number PB determined through the pinch operation explained with reference to FIG. 8A is larger than that determined through the pinch operation explained with reference to FIG. 8B. In a situation in which the respective pinch operations explained with reference to FIGS. 8A and 8B are the second touch operation for page transition, the transition-target page number PB determined through the pinch operation explained with reference to FIG. 8A is smaller than that determined through the pinch operation explained with reference to FIG. 8B.

In the above configuration, as the distance H between the touch points T1 and T2 before the distance therebetween is reduced is short, transition of the displayed image on the display section 2 can be performed to an image of a further distant page number even when the distance H between the touch points T1 and T2 is reduced by the same length N. That is, the controller 5 determines the transition-target page number based on a result of detection by the detecting section 3 such that the ratio of the number of the transition pages to the length N by which the distance H between the touch points T1 and T2 is reduced increases as the distance H between the touch points T1 and T2 before the distance therebetween is reduced is short.

In the above embodiment and variations, a touch-input for the page-transition operation on the display section 2 may be detected when it is detected that one of touch points of a multi-touch is located within a predetermined distance from a predetermined point of the screen of the display section 2. For example, it may be determined in a situation in which the window is displayed on the screen of the display section 2 that a multi-touch for the page-transition operation is made on the window when it is detected that one of touch points of the multi-touch is located within a predetermined distance from a predetermined point of the window (e.g., left or right edge of the window). The window is an operation screen displayed on the screen of the display section 2, for example.

The embodiment of the present disclosure has been explained so far with reference to the drawings (FIGS. 1 to 8B). It should be noted that the present disclosure is not limited to the above embodiment and practicable in various manners within the scope not departing from the gist of the present disclosure. The drawings schematically illustrate elements of configuration in order to facilitate understanding. Properties of the elements of configuration illustrated in the drawings such as thickness, length, and quantity may differ from reality in order to aid preparation of the drawings. Materials, shapes, dimensions, etc. of the elements of configuration given in the above embodiment are merely examples that do not impart any particular limitations and may be altered in various ways, so long as such alterations do not substantially deviate from the configuration of the present disclosure.

## Claims

1. A display device (1) comprising:
a controller (5) including a central processing unit;
a display section (2) configured to display, under control of the controller, one (any one of GA to GZ) of a plurality of images (G) for which respective page numbers are set; and
a detecting section (3) configured to detect a touch point (T) made on the display section, wherein
the detecting section detects that a distance (H, H1, or H2) between touch points (T1 and T2) of a multi-touch made on the display section displaying the one image is reduced,
the controller determines, based on a result of detection by the detecting section, a transition-target page number (PB) from the page numbers set for the respective plurality of images according to a length (N) by which the distance between the touch points is reduced and causes transition of the one image displayed on the display section to a transition-target image, and
a page number set for the transition-target image is the transition-target page number.

2. The display device according to claim 1, wherein
the detecting section detects that one of the touch points of the multi-touch is located within a predetermined distance (S) from a predetermined point (2L or 2R) of the display section and that the distance between the touch points is reduced , and
the controller determines the transition-target page number based on a result of detection by the detecting section.

3. The display device according to claim 1 or 2, wherein
the detecting section detects removal of the multi-touch on the display section, and
the controller causes transition of the one image displayed on the display section to the transition-target image based on a result of detection by the detecting section.

4. The display device according to any one of claims 1 to 3, wherein
the controller determines the transition-target page number based on the result of detection by the detecting section such that a number of transition pages corresponding to a difference between a page number set for the one image and the transition-target page number increases as the length by which the distance between the touch points is reduced is increased.

5. The display device according to claim 4, wherein
the controller determines the transition-target page number based on the result of detection by the detecting section such that a ratio of the number of the transition pages to the length by which the distance between the touch points is reduced increases as the distance between the touch points before the distance therebetween is reduced is short.

6. The display device according to any one of claims 1 to 5, wherein
the controller causes the display section to display the transition-target page number.

7. The display device according to claim 2, wherein
the detecting section detects that the one of the touch points is located within a predetermined distance from an edge of a screen of the display section, and
the controller determines the transition-target page number from page numbers subsequent to a page number set for the one image based on a result of detection by the detecting section.

8. The display device according to claim 2, wherein
the detecting section detects that the one of the touch points is located within a predetermined distance from an edge of a screen of the display section, and
the controller determines the transition-target page number from page numbers previous to a page number set for the one image based on a result of detection by the detecting section.

9. The display device according to claim 7, wherein
based on the result of detection by the detecting section, the controller causes the display section to display, among the plurality of images, images for which respective page numbers subsequent to that for the one image are set such that the images are displaced from one another behind the one image in a layered manner.

10. The display device according to claim 8, wherein
based on the result of detection by the detecting section, the controller causes the display section to display, among the plurality of images, images for which respective page numbers previous to that for the one image are set such that the images are displaced from one another behind the one image in a layered manner.

11. The display device according to claim 9 or 10, wherein
the controller causes the display section to display respective peripheral parts (KB, KC, and KD) of all images layered over the transition-target image so as to be folded up in front of the one image.

12. The display device according to claim 5, wherein
the controller
calculates a total number of the one image and images displayed on the display section so as to be displaced from one another behind the one image in a layered manner,
divides the total number by the distance between the touch points before the distance therebetween is reduced,
multiplies a resultant quotient by the length by which the distance between the touch points is reduced, and
in determining the transition-target page number from page numbers subsequent to the page number set for the one image based on the result of detection by the detecting section, adds a resultant product to the page number set for the one image to determine the transition-target page number, or
in determining the transition-target page number from page numbers previous to the page number set for the one image based on the result of detection by the detecting section, subtracts a resultant product from the page number set for the one image to determine the transition-target page number.

13. The display device according to claim 4, wherein
the number of the transition pages corresponds to the difference between the page number set for the one image and the transition-target page number, and
the controller
determines the number of the transition pages according to the length by which the distance between the touch points is reduced, and
determines a sum of the page number set for the one image, the number of the transition pages, and 1 to be the transition-target page number.
